(19) Europäisches Patentamt
European Patent Office
Office européen des brevets

(11) **EP 3 720 233 A1**

(12) **EUROPEAN PATENT APPLICATION**
published in accordance with Art. 153(4) EPC

(43) Date of publication:
**07.10.2020 Bulletin 2020/41**

(51) Int Cl.:
***H04W 74/08*** (2009.01)

(21) Application number: **18904532.1**

(86) International application number:
**PCT/CN2018/075695**

(22) Date of filing: **07.02.2018**

(87) International publication number:
**WO 2019/153158 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Huawei Technologies Co., Ltd.
Longgang
Shenzhen, Guangdong 518129 (CN)**

(72) Inventors:
• **REN, Jian**
  **Shenzhen, Guangdong 518129 (CN)**

• **WU, Yiling**
  **Shenzhen, Guangdong 518129 (CN)**
• **ZHU, Xiaosong**
  **Shenzhen, Guangdong 518129 (CN)**
• **LI, Zheng**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR RANDOM ACCESS**

(57) This application provides a random access method and a random access apparatus, to reduce complexity of a terminal device. The random access method includes: receiving, by an access network device on a first physical random access channel carrier, a first random access preamble sent by a first terminal device; determining, by the access network device, a first physical downlink control channel carrier in a resource pool of physical downlink control channels based on at least one of the first random access preamble and the first physical random access channel carrier, wherein the resource pool of physical downlink control channels comprises at least one physical downlink control channel carrier; and scheduling, by the access network device on the first physical downlink control channel carrier, downlink control information of a random access response corresponding to the first random access preamble.

FIG. 3

**Description**

**TECHNICAL FIELD**

This application relates to the communications field, and more specifically, to a random access method and a random access apparatus in the communications field.

**BACKGROUND**

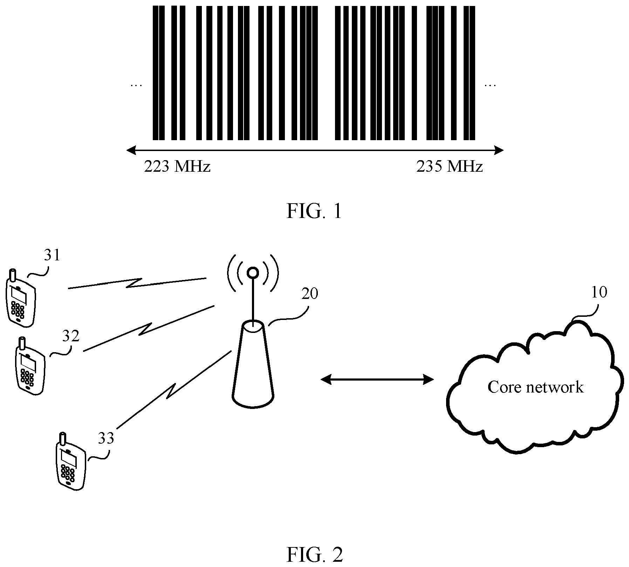

A 230 MHz dedicated network system is a narrowband communications system. On the 230 MHz frequency band, spectrums are allocated to various industries in a fragmented manner. Fragmented distribution of the spectrums is reflected by discrete spectrums in one industry and mixed spectrums in a plurality of industries. For example, frequency resources of industries such as electricity, water conservancy, mining, and military are discrete and interleaved, and the entire frequency band system is in an irregular pectinate structure, as shown in FIG. 1. For example, in the 230 MHz frequency band, bandwidth of a single channel is 25 kHz. For 223 MHz to 235 MHz, the state grid corporation of China can obtain frequency resources of 1 MHz+5 MHz, including 240 carriers of 25 kHz in total.

In a wireless communications system, a process of establishing a connection between a terminal device and a network is usually referred to as a random access (random access, RA) process. In a random access process of the 230 MHz dedicated network system, after a terminal device sends a random access preamble (random access preamble, RAP) to an access network device, the access network device first sends downlink control information (Downlink Control Information, DCI) DCI on a physical downlink control channel (physical downlink control channel, PDCCH), where the DCI is used to schedule a random access response (random access response, RAR), and then the access network device sends the random access response RAR on a downlink shared channel (physical downlink shared channel, PDSCH). After sending the RAP, the terminal device performs blind detection in an entire common search space of the physical downlink control channel PDCCH, to obtain the scheduling control information (DCI) that is sent by the access network device to schedule the RAR of the terminal device. Because frequency bands of the PDCCH common search space of the 230 MHz dedicated network system are discontinuous, complexity of the terminal is very high.

**SUMMARY**

This application provides a random access method and a random access apparatus, to reduce complexity of a terminal device.

According to a first aspect, a random access method is provided, including:

receiving, by an access network device on a first physical random access channel carrier, a first random access preamble sent by a first terminal device;
determining, by the access network device, a first physical downlink control channel carrier in a resource pool of physical downlink control channels PDCCHs based on at least one of the first random access preamble and the first physical random access channel carrier, where the resource pool of physical downlink control channels includes at least one physical downlink control channel carrier; and
scheduling, by the access network device on the first physical downlink control channel carrier, downlink control information of a random access response corresponding to the first random access preamble.

In the embodiments of this application, the terminal device and the access network device separately determine the first PDCCH carrier in the PDCCH resource pool based on the random access preamble and the PRACH carrier used to transmit the random access preamble. In addition, the downlink control information DCI that corresponds to the random access preamble and that is used to schedule the random access response RAR is transmitted by using the first PDCCH carrier, so that the terminal device needs to perform scanning and listening only on the first PDCCH carrier, thereby avoiding blind detection performed by the terminal device in an entire PDCCH common search space. Therefore, in the embodiments of this application, complexity of the terminal device can be effectively reduced.

Herein, that the access network device determines the first PDCCH carrier based on the first PRACH carrier and the first random access preamble may be understood as that the access network device determines the first PDCCH carrier based on related information about the PRACH carrier and related information about the random access preamble that are preconfigured by the access network device.

Optionally, the determining, by the access network device, a first physical downlink control channel carrier in a resource pool of physical downlink control channels based on at least one of the first random access preamble and the first physical random access channel carrier includes:

determining, by the access network device, a first index based on at least one of an index of the first random access preamble and an index of the first physical random access channel carrier; and

using, as the first physical downlink control channel carrier by the access network device, a physical downlink control channel carrier that is in the resource pool of physical downlink control channels and that corresponds to the first index.

Optionally, the determining, by the access network device, a first index based on at least one of an index of the first random access preamble and an index of the first physical random access channel carrier includes:

determining, by the access network device, the first index based on the index of the first random access preamble, where the first index and the index of the first random access preamble meet the following relationship:

$$N=\text{mod}(N_{1\text{-Index}}+a, N_2+b) \quad (1)$$

N represents a value of the first index, mod() is a modulo function, $N_{1\text{-Index}}$ represents a value of the index of the first random access preamble, $N_2$ represents a quantity of physical downlink control channel carriers included in the resource pool of physical downlink control channels, and a and b are both integers.

Optionally, the determining, by the access network device, a first index based on at least one of an index of the first random access preamble and an index of the first physical random access channel carrier includes:

determining, by the access network device, the first index based on the index of the first random access preamble and the index of the first physical random access channel carrier, where the first index, the index of the first physical random access channel carrier, and the index of the first random access preamble meet the following relationship:

$$N=\text{mod}((N_{3\text{-Index}}+a)*(N_{1\text{-Index}}+b)+c, N_2+d) \quad (2)$$

N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_2$ represents a quantity of physical downlink control channel carriers included in the resource pool of physical downlink control channels, the resource pool of physical random access channels includes at least one physical random access channel carrier, and a, b, c, and d are all integers.

Optionally, the determining, by the access network device, a first index based on at least one of an index of the first random access preamble and an index of the first physical random access channel carrier includes:

determining, by the access network device, the first index based on the index of the first random access preamble and the index of the first physical random access channel carrier, where the first index, the index of the first random access preamble, and the index of the first physical random access channel carrier meet the following relationship:

$$N=\text{mod}((N_{3\text{-Index}}+a)*(N_1+b)+N_{1\text{-Index}}+c, N_2+d) \quad (3),$$

or

$$N=\text{mod}((N_{1\text{-Index}}+a)*(N_3+b)+N_{3\text{-Index}}+c, N_2+d) \quad (4)$$

N represents a value of the first index, mod() is a modulo function, $N_{3\text{-Index}}$ represents the index of the first physical random access channel carrier in the resource pool of physical random access channels, $N_{1\text{-Index}}$ represents a value of the index of the first random access preamble, $N_1$ represents a quantity of random access preambles included in the random access preamble set, $N_2$ represents a quantity of physical downlink control channel carriers included in the resource pool of physical downlink control channels, $N_3$ represents a quantity of physical random access channel carriers included in the resource pool of physical random access channels, the resource pool of physical random access channels includes at least one physical random access channel carrier, the random access preamble set includes an available random access preamble configured by the access network device for the terminal device, and a, b, c, and d are all integers.

In the embodiments of this application, when the first PDCCH carrier is determined by using the formula (3) or (4), distribution of the index of the determined first PDCCH carrier has the best uniformity.

Optionally, before the receiving, by an access network device on a first physical random access channel carrier, a first random access preamble sent by a first terminal device, the method further includes:

sending, by the access network device, a first message to the first terminal device, where the first message is used to indicate information about each of the at least one physical downlink control channel carrier in the resource pool of physical downlink control channels.

Specifically, the first message may be a system information block (System Information Block, SIB). Herein, the first message may include a random access preamble (random access preamble, RAP) set that is configured by the access network device and that is available to the terminal device. The RAP set includes information about a plurality of preambles, for example, indexes (RA-preamble-index) of and a quantity of preambles in the preamble set available to the terminal device, and the information may specifically be a start index and a length.

Alternatively, the first message may further include information about a PRACH resource pool, for example, may include at least one type of information such as a location of each of at least one PRACH carrier included in the PRACH resource pool, an index (RA-PRACH-Index) of each PRACH carrier, and a quantity of PRACH carriers.

Alternatively, the first message may further include information about a PDCCH resource pool, for example, may include at least one type of information such as a location of each of at least one PDCCH carrier included in the PDCCH resource pool, an index (RA-PDCCH-Index) of each PDCCH carrier, and a quantity of PDCCH carriers.

Optionally, the method further includes:

receiving, by the access network device on a second physical random access channel carrier, a second random access preamble sent by a second terminal device;

determining, by the access network device, a second physical downlink control channel carrier in a second resource pool of physical downlink control channels based on at least one of the second random access preamble and the second physical random access channel carrier, where the second resource pool of physical downlink control channels is different from the first resource pool of physical downlink control channels, and the resource pool of physical downlink control channels includes at least one physical downlink control channel carrier; and

scheduling, by the access network device on the second physical downlink control channel carrier, downlink control information of a random access response corresponding to the second random access preamble.

According to a second aspect, a random access method is further provided, including:

sending, by a terminal device, a random access preamble to an access network device on a first physical downlink control channel carrier;

determining, by the terminal device, the first physical downlink control channel carrier in a resource pool of physical downlink control channels based on at least one of the random access preamble and the first physical downlink control channel carrier, where the resource pool of physical downlink control channels includes at least one physical downlink control channel carrier; and

receiving, by the terminal device on the first physical downlink control channel carrier, downlink control information that is sent by the access network device, corresponds to the random access preamble, and is used to schedule a random access response.

In the embodiments of this application, the terminal device and the access network device separately determine the first PDCCH carrier in the PDCCH resource pool based on the random access preamble and the PRACH carrier used to transmit the random access preamble. In addition, the downlink control information DCI that corresponds to the random access preamble and that is used to schedule the random access response RAR is transmitted by using the first PDCCH carrier, so that the terminal device needs to perform scanning and listening only on the first PDCCH carrier, thereby avoiding blind detection performed by the terminal device in an entire PDCCH common search space. Therefore, in the embodiments of this application, complexity of the terminal device can be effectively reduced.

Herein, that the terminal device determines the first PDCCH carrier based on the first PRACH carrier and the first random access preamble may be understood as that the terminal device determines the first PDCCH carrier based on related information about the PRACH carrier and related information about the random access preamble that are preconfigured by the access network device.

Optionally, the determining, by the terminal device, the first physical downlink control channel carrier in a resource pool of physical downlink control channels based on at least one of the random access preamble and the first physical downlink control channel carrier includes:

determining, by the terminal device, a first index based on at least one of an index of the random access preamble and an index of the first physical random access channel carrier; and

using, as the first physical downlink control channel carrier by the terminal device, a physical downlink control channel carrier that is in the resource pool of physical downlink control channels and that corresponds to the first index.

Optionally, the determining, by the terminal device, a first index based on at least one of an index of the random access preamble and an index of the first physical random access channel carrier includes:
determining, by the terminal device, the first index based on the index of the random access preamble, where the first index and the index of the random access preamble meet the following relationship:

$$N = mod(N_{1\text{-Index}} + a, N_2 + b) \quad (1)$$

N represents a value of the first index, mod() is a modulo function, $N_1$ represents a value of the index of the random access preamble, $N_2$ represents a quantity of physical downlink control channel carriers included in the resource pool of physical downlink control channels, and a and b are both integers.
Optionally, the determining, by the terminal device, a first index based on at least one of an index of the random access preamble and an index of the first physical random access channel carrier includes:
determining, by the terminal device, the first index based on the index of the random access preamble and the index of the first physical random access channel carrier, where the first index, the index of the first physical random access channel carrier, and the index of the random access preamble meet the following relationship:

$$N = mod((N_{3\text{-index}} + a)*(N_{1\text{-Index}} + b) + c, N_2 + d) \quad (2)$$

N represents a value of the first index, mod() is a modulo function, $N_{3\text{-index}}$ represents the index of the first physical random access channel carrier in a resource pool of physical random access channels, $N_{1\text{-Index}}$ represents a value of the index of the random access preamble, $N_2$ represents a quantity of physical downlink control channel carriers included in the resource pool of physical downlink control channels, the resource pool of physical random access channels includes at least one physical random access channel carrier, and a, b, c, and d are all integers.
Optionally, the determining, by the terminal device, a first index based on at least one of an index of the random access preamble and an index of the first physical random access channel carrier includes:
determining, by the terminal device, the first index based on the index of the first physical random access channel carrier, where the first index and the index of the first physical random access channel carrier meet the following relationship:

$$N = mod((N_{3\text{-Index}} + a)*(N_1 + b) + N_{1\text{-Index}} + c, N_2 + d) \quad (3),$$

or

$$N = mod((N_{1\text{-Index}} + a)*(N_3 + b) + N_{3\text{-Index}} + c, N_2 + d) \quad (4)$$

N represents a value of the first index, mod() is a modulo function, $N_{3\text{-Index}}$ represents the index of the first physical random access channel carrier in the resource pool of physical random access channels, $N_{1\text{-Index}}$ represents a value of the index of the first random access preamble, $N_1$ represents a quantity of random access preambles included in the random access preamble set, $N_2$ represents a quantity of physical downlink control channel carriers included in the resource pool of physical downlink control channels, $N_3$ represents a quantity of physical random access channel carriers included in the resource pool of physical random access channels, the resource pool of physical random access channels includes at least one physical random access channel carrier, the random access preamble set includes an available random access preamble configured by the access network device for the terminal device, and a, b, c, and d are all integers.
In the embodiments of this application, when the first PDCCH carrier is determined by using the formula (3) or (4), distribution of the index of the determined first PDCCH carrier has the best uniformity.
Optionally, the sending, by a terminal device, a random access preamble to an access network device on a first physical random access channel carrier includes:

determining, by the terminal device, the first physical random access channel carrier in the resource pool of physical random access channels, where the resource pool of physical random access channels includes at least one physical random access channel carrier; and
sending, by the terminal device, the random access preamble on the first physical random access channel carrier.

Optionally, before the sending, by a terminal device, a random access preamble to an access network device on a first physical random access channel carrier, the method further includes:
receiving, by the terminal device, a first message sent by the access network device, where the first message is used to indicate information about each of the at least one physical downlink control channel carrier in the resource pool of physical downlink control channels.

Specifically, the first message may be a system information block (System Information Block, SIB). Herein, the first message may include a random access preamble (random access preamble, RAP) set that is configured by the access network device and that is available to the terminal device. The RAP set includes information about a plurality of preambles, for example, indexes (RA-preamble-index) of and a quantity of preambles in the preamble set available to the terminal device, and the information may specifically be a start index and a length.

Alternatively, the first message may further include information about a PRACH resource pool, for example, may include at least one type of information such as a location of each of at least one PRACH carrier included in the PRACH resource pool, an index (RA-PRACH-Index) of each PRACH carrier, and a quantity of PRACH carriers.

Alternatively, the first message may further include information about a PDCCH resource pool, for example, may include at least one type of information such as a location of each of at least one PDCCH carrier included in the PDCCH resource pool, an index (RA-PDCCH-Index) of each PDCCH carrier, and a quantity of PDCCH carriers.

According to a third aspect, a random access apparatus is provided, configured to perform the method according to any one of the first aspect or the possible implementations of the first aspect. Specifically, the random access apparatus includes units configured to perform the method according to any one of the first aspect or the possible implementations of the first aspect.

According to a fourth aspect, a random access apparatus is provided, configured to perform the method according to any one of the second aspect or the possible implementations of the second aspect. Specifically, the random access apparatus includes units configured to perform the method according to any one of the second aspect or the possible implementations of the second aspect.

According to a fifth aspect, a random access apparatus is provided. The random access apparatus includes a transceiver, a memory, a processor, and a bus system. The transceiver, the memory, and the processor are connected by using the bus system. The memory is configured to store an instruction. The processor is configured to execute the instruction stored in the memory, to control the transceiver to receive and/or send a signal. In addition, when the processor executes the instruction stored in the memory, the execution enables the processor to perform the method according to any one of the first aspect or the possible implementations of the first aspect.

According to a sixth aspect, a random access apparatus is provided. The random access apparatus includes a transceiver, a memory, a processor, and a bus system. The transceiver, the memory, and the processor are connected by using the bus system. The memory is configured to store an instruction. The processor is configured to execute the instruction stored in the memory, to control the transceiver to receive and/or send a signal. In addition, when the processor executes the instruction stored in the memory, the execution enables the processor to perform the method according to any one of the second aspect or the possible implementations of the second aspect.

According to a seventh aspect, a computer-readable medium is provided, configured to store a computer program. The computer program includes an instruction used to perform the method according to any possible implementation of the first aspect.

According to an eighth aspect, a computer-readable medium is provided, configured to store a computer program. The computer program includes an instruction used to perform the method according to any possible implementation of the second aspect.

According to a ninth aspect, a computer program product is provided. The computer program product includes computer program code. When the computer program code is run by a communications unit and a processing unit, or a transceiver and a processor of a communications device (for example, a random access apparatus), the random access apparatus is enabled to perform the method according to any possible implementation of the first aspect.

According to a tenth aspect, a computer program product is provided. The computer program product includes computer program code. When the computer program code is run by a communications unit and a processing unit, or a transceiver and a processor of a communications device (for example, a random access apparatus), the random access apparatus is enabled to perform the method according to any possible implementation of the second aspect.

## BRIEF DESCRIPTION OF DRAWINGS

FIG. 1 is a schematic diagram of spectrum distribution in a 230 MHz dedicated network system;
FIG. 2 is a schematic diagram of a system architecture according to an embodiment of this application;
FIG. 3 is a schematic flowchart of a random access method according to an embodiment of this application;

FIG. 4 is a schematic block diagram of a random access apparatus according to an embodiment of this application;
FIG. 5 is a schematic block diagram of another random access apparatus according to an embodiment of this application;
FIG. 6 is a schematic block diagram of another random access apparatus according to an embodiment of this application; and
FIG. 7 is a schematic block diagram of another random access apparatus according to an embodiment of this application.

## DESCRIPTION OF EMBODIMENTS

The following describes technical solutions of this application with reference to accompanying drawings.

The technical solutions of embodiments of this application may be applied to various communications systems, such as: a global system for mobile communications (Global System of Mobile Communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunication System, UMTS), a worldwide interoperability for microwave access (Worldwide Interoperability for Microwave Access, WiMAX) communications system, a future 5th generation (5th Generation, 5G) system, or a new radio (New Radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, a user apparatus, or the like; or the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a future 5G network, or a terminal device in a future evolved public land mobile network (Public Land Mobile Network, PLMN). This is not limited in the embodiments of this application.

The access network device in this embodiment of this application may be a device configured to communicate with a terminal device. The access network device may be a base transceiver station (Base Transceiver Station, BTS) in a global system for mobile communications (Global System of Mobile communication, GSM) or in a code division multiple access (Code Division Multiple Access, CDMA) system, or may be a NodeB (NodeB, NB) in a wideband code division multiple access (Wideband Code Division Multiple Access, WCDMA) system, or may be an evolved NodeB (Evolutional NodeB, eNB or eNodeB) in an LTE system, or may be a radio controller in a cloud radio access network (Cloud Radio Access Network, CRAN) scenario. Alternatively, the access network device may be a relay station, an access point, a vehicle-mounted device, a wearable device, a network device in a future 5G network, a network device in a future evolved PLMN network, or the like. This is not limited in the embodiments of this application.

FIG. 2 is a schematic diagram of a network architecture of a communications system provided in an embodiment of this application. For example, the communications system is a narrowband enterprise Internet of Things system oriented to an enterprise Internet of Things market, for example, the foregoing 230 MHz dedicated network system. Main network elements in the communications system include a core network 10, an access network device 20, and terminal devices (31, 32, and 33). Specifically, the terminal devices (31, 32, and 33) perform access by using the access network device 20, and the access network device 20 is connected to the core network 10 and completes backhaul and forward transmission of data.

In the 230 MHz dedicated network system, bandwidth of a single channel can only be 25 kHz according to spectrum and regulations. Because a capacity of a single 25 kHz carrier is relatively small, a resource pool including a plurality of channels may be used for communication to improve spectrum efficiency, and a probability of resource collision may be reduced. For example, a resource pool of physical random access channels (Physical Random Access Channel, PRACH) and a PDCCH resource pool may be separately formed. The PRACH resource pool includes at least one PRACH carrier (or channel), and the PDCCH resource pool includes at least one PDCCH carrier (or channel).

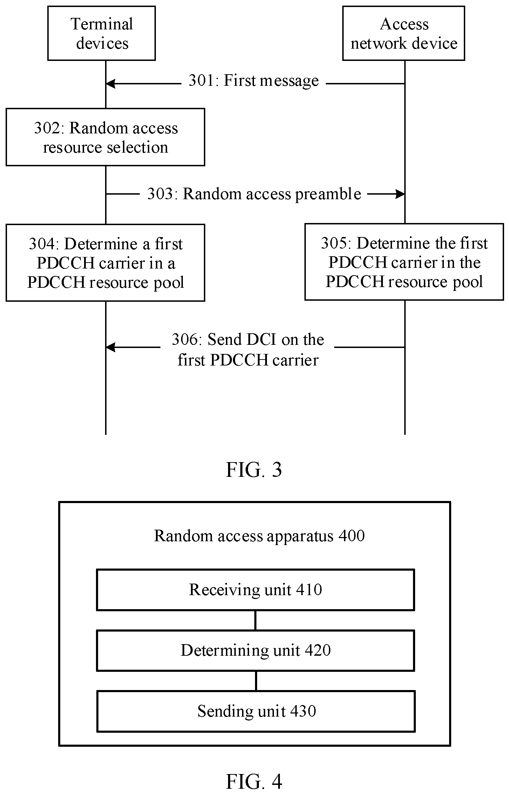

FIG. 3 is a schematic flowchart of a random access method provided in an embodiment of this application. It should be understood that FIG. 3 shows steps or operations of the random access method, but the steps or operations are merely examples. In this embodiment of this application, other operations or variations of the operations in FIG. 3 may be further performed. In addition, the steps in FIG. 3 may be performed in a sequence different from that presented in FIG. 3, and possibly, not all the operations in FIG. 3 need to be performed.

Optionally, 301: an access network device sends a first message to a terminal device, where the first message includes related information used for resource selection during random access process.

Specifically, the first message may be a system information block (System Information Block, SIB). Herein, the first message may include a random access preamble (random access preamble, RAP) set that is configured by the access network device and that is available to the terminal device. The RAP set includes information about a plurality of preambles, for example, indexes (RA-preamble-index) of and a quantity of preambles in the preamble set available to the terminal device, and the information may specifically be a start index and a length. Alternatively, the first message may further include information about a PRACH resource pool, for example, may include at least one type of information such as a location of each of at least one PRACH carrier included in the PRACH resource pool, an index (RA-PRACH-Index) of each PRACH carrier, and a quantity of PRACH carriers. Alternatively, the first message may further include information about a PDCCH resource pool, for example, may include at least one type of information such as a location of each of at least one PDCCH carrier included in the PDCCH resource pool, an index (RA-PDCCH-Index) of each PDCCH carrier, and a quantity of PDCCH carriers.

302: The terminal device selects a random access resource.

Specifically, in a process of random access resource selection (Random Access Resource Selection), the terminal device may randomly select a PRACH channel from the PRACH resource pool, and randomly determine an RA-preamble-index. Herein, the PRACH channel may be referred to as a first PRACH channel or a first PRACH carrier, and the first PRACH channel or the first PRACH carrier has a unique PRACH channel index (RA-PRACH-Index).

303: The terminal device sends a random access preamble to the access network device.

Specifically, the terminal device may send, on the first PRACH carrier selected in 302, a random access preamble corresponding to the RA-preamble-index determined in 302. The random access preamble herein may also be referred to as a random access request or an MSG 1.

304: The terminal device determines a first PDCCH carrier in the PDCCH resource pool.

Specifically, the terminal device may determine the first PDCCH carrier based on the first PRACH carrier and the random access preamble. Herein, that the terminal device determines the first PDCCH carrier based on the first PRACH carrier and the random access preamble may be understood as that the terminal device determines the first PDCCH carrier based on the related information that the access network device configures in the first message in 301 and that is about both the PRACH carrier and the random access preamble. In addition, after determining the first PDCCH carrier, the terminal device searches, only on the first PDCCH carrier, for downlink control information DCI used to schedule a random access response RAR

Optionally, in this embodiment of this application, the terminal device may determine the first index based on at least one of the index of the random access preamble and the index of the first physical random access channel PRACH carrier, and then use, as the first PDCCH carrier, a PDCCH carrier that is in the PDCCH resource pool and that corresponds to the first index.

In a specific embodiment, the terminal device may determine the first index based on the index of the RAP. Specifically, the terminal device may determine the first index according to the following formula:

$$N=mod(N_{1\text{-index}}+a, N_2+b) \quad (1)$$

N represents a value of the first index, mod() is a modulo function, $N_{1\text{-index}}$ represents a value of the index of the RAP, $N_2$ represents a quantity of PDCCH carriers included in the PDCCH resource pool, and a and b are both integers.

In an example, the access network device may set the quantity of preambles in the preamble set to 32, set the quantity of PRACH channels in the PRACH resource pool that may be used for uplink random access to 8, and set the quantity of PDCCH channels in the downlink PDCCH resource pool also to 8 (that is, $N_2$=8). In addition, the access network device may send the related configuration to the terminal device by using a SIB. When a=1, b=0, and the RA-preamble-Index that the terminal device selects in the random access resource selection process is 2 (that is, $N_{1\text{-index}}$=2), the terminal device may determine by using the foregoing formula (1):

$$N=2.$$

In other words, the terminal device may determine, by using the formula (1), that the RA-PDCCH-Index is 2 (that is, N=2). In this case, the terminal device may receive, only on a PDCCH carrier whose number is 2 (that is, whose index is 2) in the resource pool, the control message DCI used to schedule the RAR message.

In another specific embodiment, in this embodiment of this application, the terminal device may alternatively determine the first index based on the index of the RAP and the index of the first PRACH carrier.

Specifically, the terminal device may determine the first index according to the following formula:

$$N=\text{mod}((N_{3\text{-index}}+a)*(N_{1\text{-index}}+b)+c,\ N_2+d) \qquad (2)$$

N represents a value of the first index, mod() is a modulo function, $N_{3\text{-index}}$ represents an index of the first PRACH carrier in the PRACH resource pool, $N_{1\text{-index}}$ represents a value of the index of the RAP, $N_2$ represents a quantity of PDCCH carriers included in the PDCCH resource pool, the PRACH resource pool includes at least one PRACH carrier, and a, b, c, and d are all integers.

In an example, the access network device may set the quantity of preambles in the preamble set to 32, set the quantity of PRACH channels in the PRACH resource pool that may be used for uplink random access to 8, and set the quantity of PDCCH channels in the downlink PDCCH resource pool also to 8 (that is, $N_2=8$). In addition, the access network device may send the related configuration to the terminal device by using a SIB. When a=1, b=1, c=-1, d=0, the RA-preamble-Index that the terminal device selects in the random access resource selection process is 2 (that is, $N_{1\text{-index}}=2$), and the selected RA-PRACH-Index is 7 (that is, $N_{3\text{-index}}=7$), the terminal device may determine by using the foregoing formula (2):

$$N=7.$$

In other words, the terminal device may determine, by using the formula (2), that the RA-PDCCH-Index is 7 (that is, N=7). In this case, the terminal device may receive, only on a PDCCH carrier whose number is 7 (that is, whose index is 7) in the resource pool, the downlink control message DCI used to schedule the RAR message.

In another specific embodiment, in this embodiment of this application, the terminal device may alternatively determine the first index based on the index of the first PRACH carrier.

Specifically, the terminal device may determine the first index according to the following formula:

$$N=\text{mod}((N_{3\text{-index}}+a)*(N_1+b)+N_{1\text{-Index}}+c,\ N_2+d) \qquad (3),$$

or

$$N=\text{mod}((N_{1\text{-Index}}+a)*(N_3+b)+N_{3\text{-Index}}+c,\ N_2+d) \qquad (4)$$

N represents a value of the first index, mod() is a modulo function, $N_{3\text{-Index}}$ represents the index of the first physical random access channel carrier in the resource pool of physical random access channels, $N_{1\text{-Index}}$ represents a value of the index of the first random access preamble, $N_1$ represents a quantity of random access preambles included in the random access preamble set, $N_2$ represents a quantity of physical downlink control channel carriers included in the resource pool of physical downlink control channels, $N_3$ represents a quantity of physical random access channel carriers included in the resource pool of physical random access channels, the resource pool of physical random access channels includes at least one physical random access channel carrier, the random access preamble set includes an available random access preamble configured by the access network device for the terminal device, and a, b, c, and d are all integers.

In an example, the access network device may set the quantity of preambles in the preamble set to 32 (that is, $N_1=32$), set the quantity of PRACH channels in the PRACH resource pool that may be used for uplink random access to 8 (that is, $N_3=8$), and set the quantity of PDCCH channels in the downlink PDCCH resource pool also to 8 (that is, $N_2=8$). In addition, the access network device may send the related configuration to the terminal device by using a SIB. When a=1, b=1, c=-1, d=0, the RA-preamble-Index that the terminal device selects in the random access resource selection process is 2 (that is, $N_{1\text{-index}}=2$), and the selected RA-PRACH-Index is 7 (that is, $N_{3\text{-index}}=7$), the terminal device may determine by using the foregoing formula (3):

$$N=1.$$

Alternatively, the terminal device may determine by using the foregoing formula (4):

$$N=1.$$

In other words, the terminal device may determine, by using the formula (3), that the RA-PDCCH-Index is 1 (that is, N=1). In this case, the terminal device may receive, only on a PDCCH carrier whose number is 1 (that is, whose index is 1) in the resource pool, the downlink control message DCI used to schedule the RAR message. Alternatively, the terminal device may determine, by using the formula (4), that the RA-PDCCH-Index is 1 (that is, N=1). In this case, the terminal device may receive, only on a PDCCH carrier whose number is 1 (that is, whose index is 1) in the resource pool, the downlink control message DCI used to schedule the RAR message.

In addition, in this embodiment of this application, when the first PDCCH carrier is determined by using the formula (3) or (4), distribution of the index of the determined first PDCCH carrier has the best uniformity.

305: The access network device determines the first PDCCH carrier in the PDCCH resource pool.

Specifically, the access network device may determine the first PDCCH carrier based on the first PRACH carrier and the random access preamble. Herein, that the access network device determines the first PDCCH carrier based on the first PRACH carrier and the random access preamble may be understood as that the access network device determines the first PDCCH carrier based on the related information that the access network device configures in the first message in 301 and that is about both the PRACH carrier and the random access preamble. In addition, after determining the first PDCCH carrier, the access network device sends, only on the first PDCCH carrier, the downlink control information DCI of the random access response RAR

Optionally, in this embodiment of this application, the access network device may determine the first index based on at least one of the index of the RAP and the index of the first physical random access channel PRACH carrier, and then use, as the first PDCCH carrier, a PDCCH carrier that is in the PDCCH resource pool and that corresponds to the first index.

In a specific embodiment, the access network device determines the first index based on the index of the RAP. Specifically, the access network device may determine the first index according to the formula (1) in 304. Specifically, for a process of determining the first index by the access network device according to the formula (1), refer to the description in 304. To avoid repetition, details are not described herein again.

In another specific embodiment, in this embodiment of this application, the access network device may determine the first index based on the index of the RAP and the index of the first physical random access channel PRACH carrier used to transmit the random access preamble. Specifically, the access network device may determine the first index according to the formula (2) in 304. Specifically, for a process of determining the first index by the access network device according to the formula (2), refer to the description in 304. To avoid repetition, details are not described herein again.

In another specific embodiment, in this embodiment of this application, the access network device may determine the first index based on the index of the first physical random access channel PRACH carrier used to transmit the random access preamble. Specifically, the access network device may determine the first index according to the formula (3) or (4) in 304. Specifically, for a process of determining the first index by the access network device according to the formula (3) or (4), refer to the description in 304. To avoid repetition, details are not described herein again.

It should be noted that a chronological order of 304 and 305 is not limited in this embodiment of this application. In other words, 304 and 305 may be performed at the same time, or 304 may be performed before 305, or 305 may be performed before 304.

306: The access network device sends, on the first PDCCH carrier to the terminal device, the control message DCI used to schedule the random access response RAR. Correspondingly, the terminal device searches for the DCI only on the first PDCCH carrier. To be specific, the access network device sends the DCI to the terminal device on the first PDCCH carrier, and the DCI is used to schedule the random access response RAR.

It should be noted that in 304 and 305 in this embodiment of this application, the terminal device and the access network device may separately determine an index of the PDCCH based on the random access resources or resource (the PRACH carrier and/or the RAP). In addition, the PDCCH carrier determined by the terminal device in 304 and the PDCCH carrier determined by the access network device in 305 are the same PDCCH carrier, where the determining is performed based on the first message and a same algorithm in 301. Therefore, in this way, the terminal device may search, only on the first PDCCH carrier, for the downlink control information DCI used to schedule the random access response RAR, and may obtain, through searching, the RAR corresponding to the random access preamble in 303.

It should be further noted that in this embodiment of this application, two different terminal devices may perform random access at the same time by using the access network device. For example, the access network device may receive the first random access preamble sent by the first terminal device on the first PRACH carrier, and may further receive a second random access preamble sent by a second terminal device on a second PRACH carrier. In this way, the access network device may determine the first physical downlink control channel carrier in the first resource pool of physical downlink control channels separately based on at least one of the first random access preamble and the first physical random access channel carrier, and At the same time, the access network device further determines a second physical downlink control channel carrier in a second resource pool of physical downlink control channels based on at least one of the second random access preamble and the second physical random access channel carrier. Herein, the second resource pool of physical downlink control channels is different from the first resource pool of physical downlink control channels, that is, a carrier frequency of a physical downlink control channel included in the second resource pool of physical downlink control channels is different from a carrier frequency of a physical downlink control channel included in the first resource pool of physical downlink control channels.

Therefore, in this embodiment of this application, the terminal device and the access network device separately determine the first PDCCH carrier in the PDCCH resource pool based on the random access preamble and the PRACH carrier used to transmit the random access preamble. In addition, the downlink control information DCI that corresponds to the random access preamble and that is used to schedule the random access response RAR is transmitted by using the first PDCCH carrier, so that the terminal device needs to perform scanning and listening only on the first PDCCH carrier, thereby avoiding blind detection performed by the terminal device in an entire PDCCH common search space. Therefore, in this embodiment of this application, complexity of the terminal device can be effectively reduced.

FIG. 4 is a schematic block diagram of a random access apparatus 400 provided in an embodiment of this application.

A receiving unit 410 is configured to receive, on a first physical random access channel carrier, a first random access preamble sent by a first terminal device.

A determining unit 420 is configured to determine a first physical downlink control channel carrier in a first resource pool of physical downlink control channels based on at least one of the first random access preamble and the first physical random access channel carrier, where the resource pool of physical downlink control channels includes at least one physical downlink control channel carrier.

A sending unit 430 is configured to schedule, on the first physical downlink control channel carrier, downlink control information of a random access response corresponding to the first random access preamble.

Optionally, the determining unit 420 is specifically configured to:

determine a first index based on at least one of an index of the first random access preamble and an index of the first physical random access channel carrier; and
use, as the first physical downlink control channel carrier, a physical downlink control channel carrier that is in the resource pool of physical downlink control channels and that corresponds to the first index.

Optionally, the determining unit 420 is specifically configured to:
determine the first index based on the index of the first random access preamble, where the first index and the index of the first random access preamble meet the following relationship:

$$N = \mathrm{mod}(N_{1\text{-Index}} + a,\ N_2 + b),$$

where
N represents a value of the first index, mod() is a modulo function, $N_{1\text{-Index}}$ represents a value of the index of the first random access preamble, $N_2$ represents a quantity of physical downlink control channel carriers included in the resource pool of physical downlink control channels, and a and b are both integers.

Optionally, the determining unit 420 is specifically configured to:
determine the first index based on the index of the first random access preamble and the index of the first physical random access channel carrier, where the first index, the index of the first physical random access channel carrier, and the index of the first random access preamble meet the following relationship:

$$N = \mathrm{mod}((N_{3\text{-Index}} + a) * (N_{1\text{-Index}} + b) + c,\ N_2 + d),$$

where
N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_2$ represents a quantity of physical downlink control channel carriers included in the resource pool of physical downlink control channels, the resource pool of physical random access channels includes at least one physical random access channel carrier, and a, b, c, and d are all integers.

Optionally, the determining unit 420 is specifically configured to:
determine the first index based on the index of the first random access preamble and the index of the first physical random access channel carrier, where the first index, the index of the first random access preamble, and the index of the first physical random access channel carrier meet the following relationship:

$$N=\text{mod}((N_{3\text{-Index}}+a)*(N_1+b)+N_{1\text{-Index}}+c, N_2+d),$$

or

$$N=\text{mod}((N_{1\text{-Index}}+a)*(N_3+b)+N_{3\text{-Index}}+c, N_2+d),$$

where

N represents a value of the first index, mod() is a modulo function, $N_{3\text{-Index}}$ represents the index of the first physical random access channel carrier in the resource pool of physical random access channels, $N_{1\text{-Index}}$ represents a value of the index of the first random access preamble, $N_1$ represents a quantity of random access preambles included in the random access preamble set, $N_2$ represents a quantity of physical downlink control channel carriers included in the resource pool of physical downlink control channels, $N_3$ represents a quantity of physical random access channel carriers included in the resource pool of physical random access channels, the resource pool of physical random access channels includes at least one physical random access channel carrier, the random access preamble set includes an available random access preamble configured by the access network device for the terminal device, and a, b, c, and d are all integers.

Optionally, the sending unit 430 is further configured to send a first message to the first terminal device, where the first message is used to indicate information about each of the at least one physical downlink control channel carrier in the resource pool of physical downlink control channels.

Optionally, the receiving unit 410 is further configured to receive, on a second physical random access channel carrier, a second random access preamble sent by a second terminal device;

the determining unit 420 is further configured to determine a second physical downlink control channel carrier in a second resource pool of physical downlink control channels based on at least one of the second random access preamble and the second physical random access channel carrier, where the second resource pool of physical downlink control channels is different from the first resource pool of physical downlink control channels, and the resource pool of physical downlink control channels includes at least one physical downlink control channel carrier; and

the sending unit 430 is further configured to schedule, on the second physical downlink control channel carrier, downlink control information of a random access response corresponding to the second random access preamble.

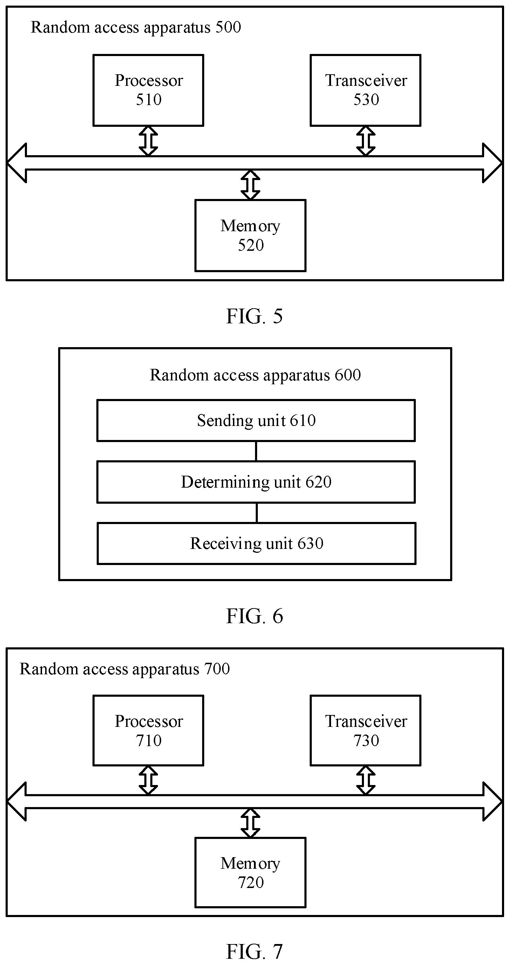

It should be noted that in this embodiment of the present invention, the determining unit 420 may be implemented by a processor, and the receiving unit 410 and the sending unit 430 may be implemented by a transceiver. As shown in FIG. 5, a random access apparatus 500 may include a processor 510, a memory 520, and a transceiver 530. The memory 520 may be configured to store, for example, code executed by the processor 510. The processor 510 may be configured to process data or a program.

During implementation, steps in the foregoing method may be implemented by using a hardware integrated logical circuit in the processor 510 or an instruction in a form of software. The steps of the method disclosed with reference to the embodiments of the present invention may be directly performed by a hardware processor, or may be performed by using a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory 520. The processor 510 reads information in the memory 520 and implements, in combination with hardware of the processor 510, the steps in the foregoing method. To avoid repetition, details are not described herein again.

The apparatus 400 shown in FIG. 4 or the apparatus 500 shown in FIG. 5 can implement processes performed by the access network device corresponding to the foregoing method embodiments. Specifically, for the apparatus 400 or the apparatus 500, refer to the foregoing descriptions. To avoid repetition, details are not described herein again.

FIG. 6 is a schematic block diagram of a random access apparatus 600 provided in an embodiment of this application.

A sending unit 610 is configured to send a random access preamble to an access network device on a first physical downlink control channel carrier.

A determining unit 620 is configured to determine the first physical downlink control channel carrier in a resource pool of physical downlink control channels based on at least one of the random access preamble and the first physical downlink control channel carrier, where the resource pool of physical downlink control channels includes at least one physical downlink control channel carrier.

The receiving unit 630 is configured to receive, on the first physical downlink control channel carrier, downlink control information that is sent by the access network device, corresponds to the random access preamble, and is used to schedule a random access response.

Optionally, the determining unit 620 is specifically configured to:

determine a first index based on at least one of an index of the random access preamble and an index of the first physical random access channel carrier; and
use, as the first physical downlink control channel carrier, a physical downlink control channel carrier that is in the resource pool of physical downlink control channels and that corresponds to the first index.

Optionally, the determining unit 620 is specifically configured to:
determine the first index based on the index of the random access preamble, where the first index and the index of the random access preamble meet the following relationship:

$$N=mod(N_{1\text{-Index}}+a, N_2+b),$$

where
N represents a value of the first index, mod() is a modulo function, $N_{1\text{-Index}}$ represents a value of the index of the random access preamble, $N_2$ represents a quantity of physical downlink control channel carriers included in the resource pool of physical downlink control channels, and a and b are both integers.

Optionally, the determining unit 620 is specifically configured to:
determine the first index based on the index of the random access preamble and the index of the first physical random access channel carrier, where the first index, the index of the first physical random access channel carrier, and the index of the random access preamble meet the following relationship:

$$N=mod((N_{3\text{-index}}+a)*(N_{1\text{-Index}}+b)+c, N_2+d),$$

where
N represents a value of the first index, mod() is a modulo function, $N_{3\text{-index}}$ represents the index of the first physical random access channel carrier in a resource pool of physical random access channels, $N_{1\text{-Index}}$ represents a value of the index of the random access preamble, $N_2$ represents a quantity of physical downlink control channel carriers included in the resource pool of physical downlink control channels, the resource pool of physical random access channels includes at least one physical random access channel carrier, and a, b, c, and d are all integers.

Optionally, the determining unit 620 is specifically configured to:
determine the first index based on the index of the first random access preamble and the index of the first physical random access channel carrier, where the first index, the index of the first random access preamble, and the index of the first physical random access channel carrier meet the following relationship:

$$N=mod((N_{3\text{-Index}}+a)*(N_1+b)+N_{1\text{-Index}}+c, N_2+d),$$

or

$$N=mod((N_{1\text{-Index}}+a)*(N_3+b)+N_{3\text{-Index}}+c, N_2+d),$$

where
N represents a value of the first index, mod() is a modulo function, $N_{3\text{-Index}}$ represents the index of the first physical random access channel carrier in the resource pool of physical random access channels, $N_{1\text{-Index}}$ represents a value of the index of the first random access preamble, $N_1$ represents a quantity of random access preambles included in the random access preamble set, $N_2$ represents a quantity of physical downlink control channel carriers included in the resource pool of physical downlink control channels, $N_3$ represents a quantity of physical random access channel carriers included in the resource pool of physical random access channels, the resource pool of physical random access channels includes at least one physical random access channel carrier, the random access preamble set includes an available random access preamble configured by the access network device for the terminal device, and a, b, c, and d are all integers.

Optionally, the sending unit 620 is specifically configured to:

determine the first physical random access channel carrier in the resource pool of physical random access channels, where the resource pool of physical random access channels includes at least one physical random access channel carrier; and

send the random access preamble on the first physical random access channel carrier.

Optionally, the receiving unit 630 is configured to receive a first message sent by the access network device, where the first message is used to indicate information about each of the at least one physical downlink control channel carrier in the resource pool of physical downlink control channels.

It should be noted that in this embodiment of the present invention, the determining unit 620 may be implemented by a processor, and the sending unit 610 and the receiving unit 630 may be implemented by a transceiver. As shown in FIG. 7, a random access apparatus 700 may include a processor 710, a memory 720, and a transceiver 730. The memory 720 may be configured to store, for example, code executed by the processor 710. The processor 710 may be configured to process data or a program.

During implementation, steps in the foregoing method may be implemented by using a hardware integrated logical circuit in the processor 710 or an instruction in a form of software. The steps of the method disclosed with reference to the embodiments of the present invention may be directly performed by a hardware processor, or may be performed by using a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory 720. The processor 710 reads information in the memory 720 and implements, in combination with hardware of the processor 510, the steps in the foregoing method. To avoid repetition, details are not described herein again.

The apparatus 600 shown in FIG. 6 or the apparatus 700 shown in FIG. 7 can implement processes performed by the terminal device corresponding to the foregoing method embodiments. Specifically, for the apparatus 600 or the apparatus 700, refer to the foregoing descriptions. To avoid repetition, details are not described herein again.

An embodiment of this application further provides a computer-readable medium, configured to store a computer program. The computer program includes an instruction used to perform the method corresponding to the terminal device or the network device in the foregoing method embodiments.

An embodiment of this application further provides a computer program product. The computer program product includes computer program code. When the computer program code is run by a communications unit and a processing unit, or a transceiver and a processor of a communications device (for example, a terminal device or an access network device), the communications device is enabled to perform the method corresponding to the terminal device or the network device in the foregoing method embodiments.

An embodiment of this application further provides a communications chip. The communications chip stores an instruction, and when the instruction is run on a communications apparatus, the communications chip is enabled to perform the method corresponding to the terminal device or the network device in the foregoing method embodiments.

The embodiments of this application may be separately or jointly used. This is not limited herein.

It should be understood that, descriptions such as first and second in the embodiments of this application are only used as examples and used to distinguish between objects, neither indicate a sequence, nor indicate a specific limitation on a quantity of devices in the embodiments of this application, and cannot constitute any limitation on the embodiments of this application.

It should be further understood that sequence numbers of the foregoing processes do not mean execution sequences in various embodiments of this application. An execution sequence of the processes should be determined based on functions and internal logic of the processes, and should not be construed as any limitation on the implementation process of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a specific application and design constraint conditions of the technical solutions. A person skilled in the art may use different methods to implement the described functions for each specific application, but it should not be considered that the implementation departs from the scope of this application.

It may be clearly understood by a person skilled in the art that, for a purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatuses, and method may be implemented in other manners. For example, the described apparatus embodiments are merely examples. For example, the unit division is merely logical function division and may be other division during actual implementation. For example, a plurality of units or components may be combined or may be integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or another form.

A unit described as a separate part may or may not be physically separate, and a part shown as a unit may or may not be a physical unit, that is, may be located at one position, or may be distributed on a plurality of network units. Some or all of the units may be selected based on actual requirements to achieve the objective of the solutions of the embodiments.

In addition, functional units in each embodiment of this application may be integrated into one processing unit, or each of the units may exist physically independently, or two or more units may be integrated into one unit.

When the functions are implemented in a form of a software functional unit, and are sold or used as an independent product, the functions may be stored in a computer-readable storage medium. Based on such an understanding, the technical solutions of this application essentially, that is, a part contributing to the prior art, or some of the technical solutions may be implemented in a form of a software product. The computer software product is stored in a storage medium, and includes instructions to enable a computer device (which may be a personal computer, a server, or a network device) to perform all or some of the steps of the methods described in the embodiments of this application. The foregoing storage medium includes various mediums that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A random access method, comprising:

   receiving, by an access network device on a first physical random access channel carrier, a first random access preamble sent by a first terminal device;
   determining, by the access network device, a first physical downlink control channel carrier in a first resource pool of physical downlink control channels based on at least one of the first random access preamble and the first physical random access channel carrier, wherein the resource pool of physical downlink control channels comprises at least one physical downlink control channel carrier; and
   scheduling, by the access network device on the first physical downlink control channel carrier, downlink control information of a random access response corresponding to the first random access preamble.

2. The method according to claim 1, wherein the determining, by the access network device, a first physical downlink control channel carrier in a resource pool of physical downlink control channels based on at least one of the first random access preamble and the first physical random access channel carrier comprises:

   determining, by the access network device, a first index based on at least one of an index of the first random access preamble and an index of the first physical random access channel carrier; and
   using, as the first physical downlink control channel carrier by the access network device, a physical downlink control channel carrier that is in the resource pool of physical downlink control channels and that corresponds to the first index.

3. The method according to claim 2, wherein the determining, by the access network device, a first index based on at least one of an index of the first random access preamble and an index of the first physical random access channel carrier comprises:
   determining, by the access network device, the first index based on the index of the first random access preamble, wherein the first index and the index of the first random access preamble meet the following relationship:

$$N = \mathrm{mod}(N_{\text{1-Index}} + a, N_2 + b),$$

wherein

N represents a value of the first index, mod() is a modulo function, $N_{1\text{-Index}}$ represents a value of the index of the first random access preamble, $N_2$ represents a quantity of physical downlink control channel carriers comprised in the resource pool of physical downlink control channels, and a and b are both integers.

4. The method according to claim 2, wherein the determining, by the access network device, a first index based on at least one of an index of the first random access preamble and an index of the first physical random access channel carrier comprises:

determining, by the access network device, the first index based on the index of the first random access preamble and the index of the first physical random access channel carrier, wherein the first index, the index of the first physical random access channel carrier, and the index of the first random access preamble meet the following relationship:

$$N = \text{mod}((N_{3\text{-Index}} + a) * (N_{1\text{-Index}} + b) + c,\ N_2 + d),$$

wherein

N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_2$ represents a quantity of physical downlink control channel carriers comprised in the resource pool of physical downlink control channels, the resource pool of physical random access channels comprises at least one physical random access channel carrier, and a, b, c, and d are all integers.

5. The method according to claim 2, wherein the determining, by the access network device, a first index based on at least one of an index of the first random access preamble and an index of the first physical random access channel carrier comprises:

determining, by the access network device, the first index based on the index of the first random access preamble and the index of the first physical random access channel carrier, wherein the first index, the index of the first random access preamble, and the index of the first physical random access channel carrier meet the following relationship:

$$N = \text{mod}((N_{3\text{-Index}} + a) * (N_1 + b) + N_{1\text{-Index}} + c,\ N_2 + d),$$

or

$$N = \text{mod}((N_{1\text{-Index}} + a) * (N_3 + b) + N_{3\text{-Index}} + c,\ N_2 + d),$$

wherein

N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_1$ represents a quantity of random access preambles comprised in a random access preamble set, $N_2$ represents a quantity of physical downlink control channel carriers comprised in the resource pool of physical downlink control channels, $N_3$ represents a quantity of physical random access channel carriers comprised in the resource pool of physical random access channels, the resource pool of physical random access channels comprises at least one physical random access channel carrier, the random access preamble set comprises an available random access preamble configured by the access network device for the terminal device, and a, b, c, and d are all integers.

6. The method according to any one of claims 1 to 5, wherein before the receiving, by an access network device on a first physical random access channel carrier, a first random access preamble sent by a first terminal device, the method further comprises:

sending, by the access network device, a first message to the first terminal device, wherein the first message is used to indicate information about each of the at least one physical downlink control channel carrier in the resource pool of physical downlink control channels.

7. The method according to any one of claims 1 to 6, further comprising:

receiving, by the access network device on a second physical random access channel carrier, a second random access preamble sent by a second terminal device;

determining, by the access network device, a second physical downlink control channel carrier in a second resource pool of physical downlink control channels based on at least one of the second random access preamble and the second physical random access channel carrier, wherein the second resource pool of physical downlink control channels is different from the first resource pool of physical downlink control channels, and the resource pool of physical downlink control channels comprises at least one physical downlink control channel carrier; and

scheduling, by the access network device on the second physical downlink control channel carrier, downlink control information of a random access response corresponding to the second random access preamble.

8. A random access method, comprising:

sending, by a terminal device, a random access preamble to an access network device on a first physical downlink control channel carrier;

determining, by the terminal device, the first physical downlink control channel carrier in a resource pool of physical downlink control channels based on at least one of the random access preamble and the first physical downlink control channel carrier, wherein the resource pool of physical downlink control channels comprises at least one physical downlink control channel carrier; and

receiving, by the terminal device on the first physical downlink control channel carrier, downlink control information that is sent by the access network device, corresponds to the random access preamble, and is used to schedule a random access response.

9. The method according to claim 8, wherein the determining, by the terminal device, the first physical downlink control channel carrier in a resource pool of physical downlink control channels based on at least one of the random access preamble and the first physical downlink control channel carrier comprises:

determining, by the terminal device, a first index based on at least one of an index of the random access preamble and an index of the first physical random access channel carrier; and

using, as the first physical downlink control channel carrier by the terminal device, a physical downlink control channel carrier that is in the resource pool of physical downlink control channels and that corresponds to the first index.

10. The method according to claim 9, wherein the determining, by the terminal device, a first index based on at least one of an index of the random access preamble and an index of the first physical random access channel carrier comprises:

determining, by the terminal device, the first index based on the index of the random access preamble, wherein the first index and the index of the random access preamble meet the following relationship:

$$N=\mod(N_{1\text{-Index}}+a, N_2+b),$$

wherein

N represents a value of the first index, mod() is a modulo function, $N_{1\text{-Index}}$ represents a value of the index of the random access preamble, $N_2$ represents a quantity of physical downlink control channel carriers comprised in the resource pool of physical downlink control channels, and a and b are both integers.

11. The method according to claim 9, wherein the determining, by the terminal device, a first index based on at least one of an index of the random access preamble and an index of the first physical random access channel carrier comprises:

determining, by the terminal device, the first index based on the index of the random access preamble and the index of the first physical random access channel carrier, wherein the first index, the index of the first physical random access channel carrier, and the index of the random access preamble meet the following relationship:

$$N=\mod ((N_{3\text{-index}}+a)*(N_{1\text{-Index}}+b)+c, N_2+d),$$

wherein

N represents a value of the first index, mod() is a modulo function, $N_{3\text{-index}}$ represents the index of the first physical random access channel carrier in a resource pool of physical random access channels, $N_{1\text{-Index}}$ represents a value of the index of the random access preamble, $N_2$ represents a quantity of physical downlink control channel carriers comprised in the resource pool of physical downlink control channels, the resource pool of physical random access channels comprises at least one physical random access channel carrier, and a, b, c, and d are all integers.

12. The method according to claim 9, wherein the determining, by the terminal device, a first index based on at least one of an index of the random access preamble and an index of the first physical random access channel carrier comprises:

determining, by the terminal device, the first index based on the index of the first random access preamble and the index of the first physical random access channel carrier, wherein the first index, the index of the first random access preamble, and the index of the first physical random access channel carrier meet the following relationship:

$$N=\mathrm{mod}((N_{3\text{-Index}}+a)*(N_1+b)+N_{1\text{-Index}}+c,\ N_2+d),$$

or

$$N=\mathrm{mod}((N_{1\text{-Index}}+a)*(N_3+b)+N_{3\text{-Index}}+c,\ N_2+d),$$

wherein
N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_1$ represents a quantity of random access preambles comprised in a random access preamble set, $N_2$ represents a quantity of physical downlink control channel carriers comprised in the resource pool of physical downlink control channels, $N_3$ represents a quantity of physical random access channel carriers comprised in the resource pool of physical random access channels, the resource pool of physical random access channels comprises at least one physical random access channel carrier, the random access preamble set comprises an available random access preamble configured by the access network device for the terminal device, and a, b, c, and d are all integers.

13. The method according to any one of claims 8 to 12, wherein the sending, by a terminal device, a random access preamble to an access network device on a first physical random access channel carrier comprises:

determining, by the terminal device, the first physical random access channel carrier in the resource pool of physical random access channels, wherein the resource pool of physical random access channels comprises at least one physical random access channel carrier; and
sending, by the terminal device, the random access preamble on the first physical random access channel carrier.

14. The method according to any one of claims 8 to 13, wherein before the sending, by a terminal device, a random access preamble to an access network device on a first physical random access channel carrier, the method further comprises:
receiving, by the terminal device, a first message sent by the access network device, wherein the first message is used to indicate information about each of the at least one physical downlink control channel carrier in the resource pool of physical downlink control channels.

15. A random access apparatus, comprising:

a receiving unit, configured to receive, on a first physical random access channel carrier, a first random access preamble sent by a first terminal device;
a determining unit, configured to determine a first physical downlink control channel carrier in a first resource pool of physical downlink control channels based on at least one of the first random access preamble and the first physical random access channel carrier, wherein the resource pool of physical downlink control channels comprises at least one physical downlink control channel carrier; and
a sending unit, configured to schedule, on the first physical downlink control channel carrier, downlink control information of a random access response corresponding to the first random access preamble.

**16.** The apparatus according to claim 15, wherein the determining unit is specifically configured to:

determine a first index based on at least one of an index of the first random access preamble and an index of the first physical random access channel carrier; and

use, as the first physical downlink control channel carrier, a physical downlink control channel carrier that is in the resource pool of physical downlink control channels and that corresponds to the first index.

**17.** The apparatus according to claim 16, wherein the determining unit is specifically configured to: determine the first index based on the index of the first random access preamble, wherein the first index and the index of the first random access preamble meet the following relationship:

$$N = mod(N_{1\text{-}Index} + a, N_2 + b),$$

wherein

N represents a value of the first index, mod() is a modulo function, $N_{1\text{-}Index}$ represents a value of the index of the first random access preamble, $N_2$ represents a quantity of physical downlink control channel carriers comprised in the resource pool of physical downlink control channels, and a and b are both integers.

**18.** The apparatus according to claim 16, wherein the determining unit is specifically configured to: determine the first index based on the index of the first random access preamble and the index of the first physical random access channel carrier, wherein the first index, the index of the first physical random access channel carrier, and the index of the first random access preamble meet the following relationship:

$$N = mod((N_{3\text{-}Index} + a)*(N_{1\text{-}Index} + b) + c, N_2 + d),$$

wherein

N represents a value of the first index, mod() is a modulo function, $N_{3\text{-}Index}$ represents the index of the first physical random access channel carrier in a resource pool of physical random access channels, $N_{1\text{-}Index}$ represents a value of the index of the first random access preamble, $N_2$ represents a quantity of physical downlink control channel carriers comprised in the resource pool of physical downlink control channels, the resource pool of physical random access channels comprises at least one physical random access channel carrier, and a, b, c, and d are all integers.

**19.** The apparatus according to claim 16, wherein the determining unit is specifically configured to: determine the first index based on the index of the first random access preamble and the index of the first physical random access channel carrier, wherein the first index, the index of the first random access preamble, and the index of the first physical random access channel carrier meet the following relationship:

$$N = mod((N_{3\text{-}Index} + a)*(N_1 + b) + N_{1\text{-}Index} + c, N_2 + d),$$

or

$$N = mod((N_{1\text{-}Index} + a)*(N_3 + b) + N_{3\text{-}Index} + c, N_2 + d),$$

wherein

N represents a value of the first index, mod() is a modulo function, $N_{3\text{-}Index}$ represents the index of the first physical random access channel carrier in a resource pool of physical random access channels, $N_{1\text{-}Index}$ represents a value of the index of the first random access preamble, $N_1$ represents a quantity of random access preambles comprised in a random access preamble set, $N_2$ represents a quantity of physical downlink control channel carriers comprised in the resource pool of physical downlink control channels, $N_3$ represents a quantity of physical random access channel carriers comprised in the resource pool of physical random access channels, the resource pool of physical random access channels comprises at least one physical random access channel carrier, the random access preamble set comprises an available random access preamble configured by the access network device for the terminal device, and a, b, c, and d are all integers.

20. The apparatus according to any one of claims 15 to 19, wherein
the sending unit is further configured to send a first message to the first terminal device, wherein the first message is used to indicate information about each of the at least one physical downlink control channel carrier in the resource pool of physical downlink control channels.

21. The apparatus according to any one of claims 15 to 20, wherein
the receiving unit is further configured to receive, on a second physical random access channel carrier, a second random access preamble sent by a second terminal device;
the determining unit is further configured to determine a second physical downlink control channel carrier in a second resource pool of physical downlink control channels based on at least one of the second random access preamble and the second physical random access channel carrier, wherein the second resource pool of physical downlink control channels is different from the first resource pool of physical downlink control channels, and the resource pool of physical downlink control channels comprises at least one physical downlink control channel carrier; and
the sending unit is further configured to schedule, on the second physical downlink control channel carrier, downlink control information of a random access response corresponding to the second random access preamble.

22. A random access apparatus, comprising:

a sending unit, configured to send a random access preamble to an access network device on a first physical downlink control channel carrier;
a determining unit, configured to determine the first physical downlink control channel carrier in a resource pool of physical downlink control channels based on at least one of the random access preamble and the first physical downlink control channel carrier, wherein the resource pool of physical downlink control channels comprises at least one physical downlink control channel carrier; and
a receiving unit, configured to receive, on the first physical downlink control channel carrier, downlink control information that is sent by the access network device, corresponds to the random access preamble, and is used to schedule a random access response.

23. The apparatus according to claim 22, wherein the determining unit is specifically configured to:

determine a first index based on at least one of an index of the random access preamble and an index of the first physical random access channel carrier; and
use, as the first physical downlink control channel carrier, a physical downlink control channel carrier that is in the resource pool of physical downlink control channels and that corresponds to the first index.

24. The apparatus according to claim 23, wherein the determining unit is specifically configured to:
determine the first index based on the index of the random access preamble, wherein the first index and the index of the random access preamble meet the following relationship:

$$N=\mathrm{mod}(N_{1\text{-Index}}+a,\ N_2+b),$$

wherein
N represents a value of the first index, mod() is a modulo function, $N_{1\text{-Index}}$ represents a value of the index of the random access preamble, $N_2$ represents a quantity of physical downlink control channel carriers comprised in the resource pool of physical downlink control channels, and a and b are both integers.

25. The apparatus according to claim 23, wherein the determining unit is specifically configured to:
determine the first index based on the index of the random access preamble and the index of the first physical random access channel carrier, wherein the first index, the index of the first physical random access channel carrier, and the index of the random access preamble meet the following relationship:

$$N=\mathrm{mod}\ ((N_{3\text{-index}}+a)*(N_{1\text{-Index}}+b)+c,\ N_2+d),$$

wherein
N represents a value of the first index, mod() is a modulo function, $N_{3\text{-index}}$ represents the index of the first physical random access channel carrier in a resource pool of physical random access channels, $N_{1\text{-Index}}$ represents a value of the index of the random access preamble, $N_2$ represents a quantity of physical downlink control channel carriers comprised in the resource pool of physical downlink control channels, the resource pool of physical random access channels comprises at least one physical random access channel carrier, and a, b, c, and d are all integers.

26. The apparatus according to claim 23, wherein the determining unit is specifically configured to:
determine the first index based on the index of the first random access preamble and the index of the first physical random access channel carrier, wherein the first index, the index of the first random access preamble, and the index of the first physical random access channel carrier meet the following relationship:

$$N=\text{mod}((N_{3\text{-Index}}+a)*(N_1+b)+N_{1\text{-Index}}+c,\ N_2+d),$$

or

$$N=\text{mod}((N_{1\text{-Index}}+a)*(N_3+b)+N_{3\text{-Index}}+c,\ N_2+d),$$

wherein
N represents a value of the first index, mod() is a modulo function, $N_{3\text{-Index}}$ represents the index of the first physical random access channel carrier in a resource pool of physical random access channels, $N_{1\text{-Index}}$ represents a value of the index of the first random access preamble, $N_1$ represents a quantity of random access preambles comprised in a random access preamble set, $N_2$ represents a quantity of physical downlink control channel carriers comprised in the resource pool of physical downlink control channels, $N_3$ represents a quantity of physical random access channel carriers comprised in the resource pool of physical random access channels, the resource pool of physical random access channels comprises at least one physical random access channel carrier, the random access preamble set comprises an available random access preamble configured by the access network device for the terminal device, and a, b, c, and d are all integers.

27. The apparatus according to any one of claims 22 to 26, wherein the sending unit is specifically configured to:

determine the first physical random access channel carrier in the resource pool of physical random access channels, wherein the resource pool of physical random access channels comprises at least one physical random access channel carrier; and
send the random access preamble on the first physical random access channel carrier.

28. The apparatus according to any one of claims 22 to 27, wherein the receiving unit is further configured to receive a first message sent by the access network device, wherein the first message is used to indicate information about each of the at least one physical downlink control channel carrier in the resource pool of physical downlink control channels.

223 MHz       235 MHz

FIG. 1

31

32

33

20

10

Core network

FIG. 2

```
┌──────────────┐                          ┌──────────────┐
│   Terminal   │                          │    Access    │
│   devices    │                          │network device│
└──────┬───────┘                          └──────┬───────┘
       │◄──────── 301: First message ────────────│
       │                                         │
┌──────┴───────────┐                             │
│ 302: Random access│                            │
│ resource selection│                            │
└──────┬───────────┘                             │
       │───── 303: Random access preamble ──────►│
       │                                         │
┌──────┴───────────┐              ┌──────────────┴────┐
│ 304: Determine a first│         │ 305: Determine the first│
│ PDCCH carrier in a│              │ PDCCH carrier in the│
│ PDCCH resource pool│             │ PDCCH resource pool│
└──────┬───────────┘              └──────────────┬────┘
       │◄──────── 306: Send DCI on the ──────────│
       │           first PDCCH carrier           │
       │                                         │
```

FIG. 3

```
┌─────────────────────────────────────────────────┐
│         Random access apparatus 400              │
│   ┌─────────────────────────────────────────┐   │
│   │           Receiving unit 410             │   │
│   └─────────────────────────────────────────┘   │
│                      │                           │
│   ┌─────────────────────────────────────────┐   │
│   │          Determining unit 420            │   │
│   └─────────────────────────────────────────┘   │
│                      │                           │
│   ┌─────────────────────────────────────────┐   │
│   │            Sending unit 430              │   │
│   └─────────────────────────────────────────┘   │
└─────────────────────────────────────────────────┘
```

FIG. 4

Random access apparatus 500

| | |
|---|---|
| Processor 510 | Transceiver 530 |

Memory 520

FIG. 5

Random access apparatus 600

Sending unit 610

Determining unit 620

Receiving unit 630

FIG. 6

Random access apparatus 700

| | |
|---|---|
| Processor 710 | Transceiver 730 |

Memory 720

FIG. 7

## INTERNATIONAL SEARCH REPORT

| International application No. |
| --- |
| **PCT/CN2018/075695** |

| | |
| --- | --- |
| **A.    CLASSIFICATION OF SUBJECT MATTER** | |
| H04W 74/08(2009.01)i | |
| According to International Patent Classification (IPC) or to both national classification and IPC | |

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP: 随机接入, 前导码, 物理随机接入信道, 物理下行控制信道, 非连续, 不连续, 池, 选择, 确定, 映射, 匹配, 索引, 随机接入响应, 下行控制信道, random access, preamble, PRACH, PDCCH, discontinuous, pool, choose, select, map, index, random access response, DCI

**C.    DOCUMENTS CONSIDERED TO BE RELEVANT**

| Category* | Citation of document, with indication, where appropriate, of the relevant passages | Relevant to claim No. |
| --- | --- | --- |
| X | CN 102811496 A (POTEVIO INSTITUTE TECHNOLOGY CO., LTD.) 05 December 2012 (2012-12-05)<br>        description, paragraphs [0010]-[0012], [0025] and [0031]-[0059] | 1-3, 6-10, 13-17, 20-24, 27-28 |
| A | CN 102231917 A (CHINA ACADEMY OF TELECOMMUNICATIONS TECHNOLOGY) 02 November 2011 (2011-11-02)<br>        entire document | 1-28 |
| A | CN 103747534 A (SHANGHAI HUAWEI TECHNOLOGIES CO., LTD.) 23 April 2014 (2014-04-23)<br>        entire document | 1-28 |
| A | US 2010278131 A1 (SAMSUNG ELECTRONICS CO., LTD.) 04 November 2010 (2010-11-04)<br>        entire document | 1-28 |

☐ Further documents are listed in the continuation of Box C.          ☑ See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **29 September 2018** | **18 October 2018** |

| Name and mailing address of the ISA/CN | Authorized officer |
| --- | --- |
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/075695**

| Patent document cited in search report | | | Publication date (day/month/year) | Patent family member(s) | | | Publication date (day/month/year) |
|---|---|---|---|---|---|---|---|
| CN | 102811496 | A | 05 December 2012 | CN | 102811496 | B | 10 June 2015 |
| CN | 102231917 | A | 02 November 2011 | CN | 102231917 | B | 20 May 2015 |
| CN | 103747534 | A | 23 April 2014 | CN | 103747534 | B | 09 March 2018 |
| | | | | EP | 3082371 | B1 | 04 April 2018 |
| | | | | US | 2016309519 | A1 | 20 October 2016 |
| | | | | EP | 3082371 | A1 | 19 October 2016 |
| | | | | WO | 2015101041 | A1 | 09 July 2015 |
| | | | | EP | 3082371 | A4 | 21 December 2016 |
| US | 2010278131 | A1 | 04 November 2010 | KR | 20100118919 | A | 08 November 2010 |
| | | | | US | 2016309521 | A1 | 20 October 2016 |
| | | | | KR | 101582196 | B1 | 04 January 2016 |
| | | | | US | 8620367 | B2 | 31 December 2013 |
| | | | | US | 9380601 | B2 | 28 June 2016 |
| | | | | US | 2014036847 | A1 | 06 February 2014 |

Form PCT/ISA/210 (patent family annex) (January 2015)